# EUROPÄISCHE PATENTSCHRIFT

(11) **EP 1 468 260 B1**
(45) Veröffentlichungstag und Bekanntmachung des Hinweises auf die Patenterteilung: **20.04.2011**
(21) Anmeldenummer: 02767085.0
(22) Anmeldetag: 05.08.2002
(51) Int. Cl.: G01L 1/24

(54) **FASEROPTISCHER BELASTUNGSSENSOR MIT KOMPLEXER STÜTZSTRUKTUR**
BASE CONSTRUCTION FOR FIBRE-OPTIC LOAD SENSORS
MONTAGE DE PRINCIPE DE CAPTEURS DE CHARGE A FIBRES OPTIQUES

(30) Priorität: 08.08.2001 DE 10138023
(43) Veröffentlichungstag der Anmeldung: 20.10.2004
(73) Patentinhaber: Sensor Line Gmbh, 86529 Schrobenhausen (DE)
(72) Erfinder: PLAMPER, Jörg, 86529 Schrobenhausen (DE)
(74) Vertreter: Karakatsanis, Georgios
(86) Internationale Anmeldenummer: PCT/DE2002/002875
(87) Internationale Veröffentlichungsnummer: WO 2003/016954

(56) Entgegenhaltungen:
- DE-C- 19 534 260
- GB-A- 2 204 679
- US-A- 5 193 129
- US-A- 5 913 245

## Beschreibung

Belastungssensoren, die einen Druck von außen über den s.g. Microbending-Effekt einer Lichtleitfaser erfassen, weisen gegenüber solchen mit abweichenden Funktionsprinzipien attraktive Vorteile auf. Es sind eine ganze Reihe von Ausführungformen bekannt. Ihnen allen ist gemeinsam, daß durch den äußeren Druck die Lichtleitfaser gegen eine harte, unebene Störstruktur gepreßt wird, was eine Vielzahl kleiner Verformungen hervorruft, die wiederum zu einem signifikanten Anstieg der Faserdämpfung führen. Speist man folglich Licht in das eine Ende der Faser ein, so führt ein äußerer Druck zu einem Rückgang der an ihrem anderen Ende ankommenden Lichtleistung. Wenn der Sensor klug aufgebaut ist, genügt zum Nachweis dieses Leistungsrückgangs ein einfacher Photodetektor.

Abgesehen von ausreichender Empfindlichkeit gibt es aber noch eine ganze Reihe weiterer Kriterien, von denen es abhängt, ob sich ein solcher Sensor in der Praxis bewährt oder nicht. So muß z.B. in vielen Fällen ein Aufbau gefordert werden, der für eine gewisse Dehnbarkeit sorgt. Das gilt nicht nur für Situationen, in denen eine gewaltsame Verformung des Sensors zu erwarten ist. Vielmehr können auch innere Spannungen, wie sie z.B. aufgrund von unterschiedlicher Temperaturausdehnung der einzelnen Komponenten im Betrieb immer auftreten, zu unangenehmen Effekten bis hin zur Zerstörung der empfindlichen Lichtleitfaser führen. Ein dehnbarer Aufbau ist ein wirksames Mittel, solche Spannungen klein zu halten. Konkret bedeutet das z.B., daß die Lichtleitfaser nicht gestreckt im Sensor verlaufen darf, damit Längenänderungen des Gesamtaufbaus ausgeglichen werden können.

Ein weiterer wichtiger Aspekt ist die Homogenität der Sensorempfindlichkeit. Bei den meisten Anwendungen wird immer nur ein relativ kleiner Teil des Sensors belastet. Das Ausgangssignal darf nicht zu sehr davon abhängig sein, welcher Teil dies gerade ist. Das führt zu der Forderung, daß die Stellen, an denen die Lichtleitfaser verformt wird (Störstellen), möglichst kleine, gleiche Abstände voneinander haben und ihrerseits möglichst gleich beschaffen sein müssen.

Äußerst wichtig ist weiterhin eine Eigenschaft, die sich mit der Eingangsimpedanz eines elektrischen Meßgeräts vergleichen läßt: Belastungssensoren gleich welcher Ausführung reagieren letztlich nicht auf eine Kraft, sondern auf eine Verformung. Legt man ein Gewicht frei auf einen solchen Sensor, so wird er mit diesem Gewicht belastet, unabhängig davon, wie stark er sich darunter verformt. Bei den meisten interessanten Anwendungen wird diese Situation jedoch nicht angetroffen, sondern das Gewicht ist noch an anderer Stelle elastisch abgestützt. Es kommt hier bei Verformung des Sensors zu einem regelrechten "Zusammenbrechen" der auf ihn einwirkenden Last. Der Weg, der erforderlich ist, um bei einer Lichtleitfaser einen Microbending-Effekt hervorzurufen, ist glücklicherweise nicht groß, dennoch dürfen ihm keine weiteren Strecken hinzugefügt werden. Das bedeutet, der Sensor muß so aufgebaut sein, daß die Lichtleitfaser alle Störstellen auch im unbelasteten Zustand stets zumindest berührt, besser noch mit einer wohldefinierten Kraft dagegen gepreßt wird. Letztere darf aber auch wieder nicht zu groß werden, denn dadurch steigt die optische Dämpfung des Sensors, und zwar (in dB gemessen) proportional zur Anzahl der Störstellen, die daher um so größer gemacht werden kann, je kleiner die Anpreßkraft ist. Praktisch läßt sich eine völlig kraftlose Berührung nicht realisieren, erst recht nicht bei einer Vielzahl von Störstellen gleichzeitig, sodaß immer eine gewisse Anpreßkraft erforderlich ist. Diese möglichst klein und dennoch ausreichend groß zu halten um überall eine Berührung sicherzustellen stellt eine nicht zu unterschätzende Schwierigkeit dar.

In innerem Zusammenhang bzw. Widerspruch mit den beiden letztgenannten Forderungen steht die Bestrebung, Belastungssensoren möglichst ausgedehnt gestalten zu können. Man verbessert die Homogenität der Empfindlichkeit durch eine hohe Dichte der Störstellen, da sich Unterschiede dann ausmitteln. Eine größere Sensorausdehnung kann man hingegen durch Verringerung der Störstellendichte erreichen, was umso leichter möglich ist, je kleiner die Unterschiede sind, die sich ausmitteln müssen. Man kann den Sensor ebenfalls größer gestalten, indem man die Anzahl der Störstellen bei gegebener Dichte erhöht. Dies wiederum gelingt umso leichter, je geringer die Dämpfungszunahme pro Störstelle ausfällt, mithin also, je kleiner die Anpreßkraft im unbelasteten Zustand gestaltet werden kann.

Man erkennt, daß die Erfüllbarkeit aller drei letztgenannten Forderungen letztlich auf größtmögliche Gleichförmigkeit der Störstellen im Verein mit möglichst guter Beherrschbarkeit einer kleinen Anpreßkraft im unbelasteten Zustand hinausläuft.

Um eine möglichst hohe Druckempfindlichkeit zu erzielen, die viele Anwendungen erst möglich macht, darf die Lichtleitfaser in unmittelbarer Umgebung der Störstellen nicht unterstützt sein; es müssen sich hier Hohlräume "unter" der Faser befinden in die hinein sie sich schon unter geringer Krafteinwirkung verformen kann. Andererseits besteht die Forderung, daß der Sensor sonst keine Hohlräume enthalten darf, denn diese müßten erst durch Verformung geschlossen werden, bevor die zu erfassende Last auf die Faser übertragen wird. Das heißt, es muß möglich sein, zur Übertragung der Last auf die Faser einen einseitigen Formschluß zwischen ihr und irgendeiner elastischen Struktur zu erzielen, in welch letztere dann die Last von außen eingeleitet werden kann. Einen Formschluß erreicht man am leichtesten durch einen Gießprozeß, bei dem sich ein Medium in flüssigem Zustand der gewünschten Form anpaßt und dann in dieser Form erstarrt oder aushärtet. Damit nun im vorliegenden Fall dieser Formschluß wie gefordert einseitig bleibt, muß es möglich sein, das flüssige Material irgendwie am Ausfüllen der notwendigen Hohlräume zu hindern, und zwar ohne daß dabei die Erfüllung der obigen Forderungen eingeschränkt wird. Das ist möglich, indem eine elastische, membranartige Struktur "über" die Lichtleitfaser gespannt wird. Dazu wiederum eignet sich nicht jeder Aufbau.

Weitere Aspekte betreffen die Herstellbarkeit des Belastungssensors. Er benötigt z.B. eine faseroptische Zuleitung, denn müßte man den optischen Sender nebst Empfänger direkt am Sensor d.h. am Meßort montieren, würde man sich dadurch vieler Vorteile der faseroptischen Ausführung begeben. Muß eine solche Zuleitung an den Sensorlichtleiter angespleißt werden, verkompliziert und verteuert das die Herstellung. Das gilt natürlich in besonderem Maße, falls sogar der Sensor selbst Spleißprozesse erforderlich macht. Am günstigsten ist es, wenn für Sensor und Zuleitung ein und dieselbe Lichtleitfaser verwendet werden kann, und da oft längere Zuleitungen erforderlich werden, ist es noch wesentlich günstiger, wenn die Herstellung unter Manipulation des mittleren Teils eines ausgedehnten Lichtleiters erfolgen kann, ohne daß dabei dessen Enden mit einbezogen werden müssen.

Aus dem Bedürfnis nach Gleichförmigkeit der Störstellen ergibt sich ein weiterer die Herstellung betreffender Aspekt: Nachdem die Lichtleitfaser - möglichst definiert - mit der Störstruktur kombiniert wurde, muß die entstandene Baugruppe weiterhin handhabbar sein, zumindest in dem Sinne, daß der Herstellungsprozeß rationell zu Ende geführt werden kann, ohne daß die wohldefinierte Anordnung von Faser und Störstruktur dabei beeinträchtigt wird. Ein gegebener Sensoraufbau ist folglich als um so vorteilhafter anzusehen, je einfacher sich eine solche wohldefinierte Anordnung herstellen läßt und je stabiler sie in sich ist.

Wichtig ist darüber hinaus noch, wie gut sich ein faseroptischer Belastungssensor in unterschiedlichen Stückzahlen herstellen läßt. Zur Optimierung seiner Eigenschaften ist es meist erforderlich, zunächst Einzelstücke testen zu können; es wäre äußerst ungünstig falls hierfür bereits umfangreiche Fertigungseinrichtungen benötigt würden. Überdies sind Anwender geneigt, erst dann größere Stückzahlen einzusetzen, wenn sich ein Pilotlos in der Praxis bewährt hat. Andererseits muß aber auch eine wirtschaftliche Fertigung in größeren Stückzahlen möglich sein, sonst scheitert die Markteinführung am zu hohen Endpreis. Die Herstellbarkeit eines Sensors sowohl in kleinen als auch in mittleren und großen Stückzahlen kann daher darüber entscheiden, ob er sich überhaupt einführen läßt oder nicht, und bei der Gestaltung seines Aufbaus ist das zu berücksichtigen.

Die Verfüllung dieser Anforderungen ist die Aufgabe der vorliegenden Erfindung. Ihr Gegenstand ist ein prinzipieller Aufbau für faseroptische Belastungssensoren, der sich in vielfältiger Weise ausgestalten und abwandeln läßt, wobei er unterschiedlichen Gewichtungen der Forderungen angepaßt werden kann.

Ein Hinweis zur Lösung eines Teils der gestellten Aufgabe läßt sich der Schrift USP 5,193,129 entnehmen. Hier wird eine Lichtleitfaser auf eine leiterähnliche Stör- und Stützstruktur geflochten, und das Ganze in einen Elastomer eingebettet. Unter der Voraussetzung, daß die "Sprossen" der leiterähnlichen Struktur ebenso wie der Lichtleiter deutlich härter als der sie umgebende Elastomer sind, werden dann bei Belastung des Aufbaus senkrecht zu der durch die leiterähnliche Struktur definierten Ebene, die "Sprossen" gegen die Lichtleitfaser gepreßt und rufen dort den bekannten Microbending-Effekt hervor.

Dieser Lösungsansatz hat den Vorteil, daß der Abstand der Leitersprossen so bemessen werden kann, daß eine wellenförmige Verbiegung der Lichtleitfaser hervorgerufen wird, die sie mit wohldefinierter Anpreßkraft abwechselnd von oben und von unten gegen die Störstruktur drückt. Man erhält eine gleichmäßige Verteilung sehr gleichförmiger Störstellen, wobei die Anordnung aus Lichtleitfaser und Störstruktur zumindest in Längsrichtung eine völlig ausreichende Stabilität aufweist.

Der Aufbau aus USP 5,193,129 weist jedoch auch einige Nachteile auf, die die Erfüllung der hier gestellten Aufgabe verhindern. Zunächst kann er nicht dehnbar gemacht werden, weniger wegen der Leiterform der Stütz- und Störstruktur (die "Holme" könnten leicht z.B. zickzackförmig gestaltet werden, was gleichzeitig eine seitliche Biegsamkeit bewirken würde) als vielmehr wegen des gestreckten Verlaufs der Lichtleitfaser. Die wellenförmige Verbiegung zählt hier nicht, weil der Verlauf dennoch in Längsrichtung der kürzestmögliche ist. Eine Dehnung des Aufbaus setzt auf jeden Fall die Lichtleitfaser unter Zugspannung. Man kann sie auch schlecht in anderer Weise führen: Da sie in seitlicher Richtung nahezu frei beweglich ist - das einzige Hindernis besteht in der durch die besagten Anpreßkräfte hervorgerufenen Reibung - wäre ein z.B. serpentinenförmiger Verlauf nicht ausreichend stabil. Wegen ihrer Biegesteifigkeit wäre die Faser immer bestrebt, die gestreckte Form wieder herzustellen, da sie hierfür aber zu lang und in Längsrichtung nicht frei beweglich ist, würde sie sich örtlich von den Leitersprossen abheben. Der Vorteil des sicheren. Kontakts zur Störstruktur wäre somit dahin.

Die nahezu freie Beweglichkeit der Lichtleitfaser in seitlicher Richtung kann auch die Gleichförmigkeit der Sensorempfindlichkeit beeinträchtigen. Wird der Sensor nämlich z.B. in einer Nut montiert um etwa darüber hinwegfahrende Fahrzeuge zu detektieren, so liegt ein Fall vor, wo er systematisch in seiner Mitte stärker verformt wird als am Rand. Er ist dann umso unempfindlicher je weiter die Faser von der Mitte entfernt verläuft. Ein solcher außermittiger Verlauf der Faser kann sich aber während der Herstellung sehr leicht einstellen, wenn ihr eine seitliche Beweglichkeit eingeräumt wird.

Wohl der schwerwiegendste Nachteil einer leiterförmigen Stütz- und Störstruktur besteht darin, daß zum Aufbringen der Lichtleitfaser eines ihrer Enden durch sämtliche Zwischenräume geführt und die Faser dann jedesmal hindurchgezogen werden muß. Das Problem wird um so schwerwiegender, je länger der Sensor selbst und vor allem auch die freien Faserenden gemacht werden sollen. Für Anwendungen im Straßenverkehr werden kabelförmige Sensoren mit Längen um 3m eingesetzt; ihre Zuleitungskabel haben Längen von typisch 30m. Günstige Störstellenabstände liegen im Bereich um 10mm. Um einen Sensor für den Straßenverkehr in der genannten Weise herzustellen müßte die Faser also rund 300 mal zwischen den Sprossen hindurchgezogen werden; wollte man diesen Sensor unter Verwendung einer einzigen Faser ohne Spleiße herstellen, so gälte diese Aussage für ein Kabel von 30m Länge. Ein solcher Herstellungsprozeß ließe sich schwerlich rationell gestalten, ganz zu schweigen von der mechanischen Beanspruchung der Faser.

Aus der GB - A- 2204679 geht ein faseroptischer Belastungssensor hervor, mit einem Lichtleiter, der an einem Ende mit einer Lichtquelle und am anderen Ende mit einem Lichtdetektor verbunden ist, wobei er zwei Mikrobiegungs-Elemente aufweist, zwischen denen eine Lichtleiterspirale angeordnet ist.

In der Schrift EP 00 103 730.8 wird ein faseroptischer Belastungssensor zur Detektion von Schienenfahrzeugen angegeben, bei dem die Lichtleitfaser mäanderförmig auf eine gitterförmige Stütz- und Störstruktur geflochten ist. Er weist im Grunde genommen die gleichen Vor- und Nachteile auf wie der Sensor aus USP 5,193,129, nur liegt hier ein Anwendungsfall vor, wo letztere nicht so schwerwiegend sind. Sensoren dieser Art kommen mit 30 bis 40 Störstellen aus, da sie immer komplett belastet werden. Aus dem gleichen Grund ist es hier auch nicht von Belang, wenn der Lichtleiter seitlich etwas verschoben wird. Die gitterförmige Stütz- und Störstruktur ist ebenfalls nicht dehnbar, dagegen werden Zugbelastungen der Lichtleitfaser durch ihren mäanderförmigen Verlauf minimiert. Zwar erfüllt dieser Sensor seine Aufgabe durchaus zufriedenstellend, jedoch läßt sich sein prinzipieller Aufbau kaum für andersartige Anwendungen (z.B. großflächige Sensoren zur Detektion von Fußgängern) benutzen, und seine Herstellung kann auch nicht als besonders rationell angesehen werden.

Die DE 195 34 260 beschreibt einen seilförmigen faseroptischen Belastungssensor, bei dem die Dehnbarkeit durch einen schraubenförmigen Verlauf der Lichtleitfaser um eine zentrale Anordnung aus Stütz- und Störstruktur erreicht wird. Der Kontakt zwischen Faser und Störstruktur wird hier durch eine elastische Umhüllung sichergestellt, eine Maßnahme, die nur für Sensoren mit Rotationssymmetrie tauglich ist. Ein Sensor dieser Art kann deshalb nicht flächig gestaltet werden. Weiter ist es schwierig, einem solchen Sensor eine gleichförmige Empfindlichkeit zu verleihen. Da die Störstellen schraubenförmig um die Symmetrieachse herum angeordnet sind, ergibt sich für eine Belastung in einer bestimmten Richtung ein quasiperiodischer Verlauf der Sensoreigenschaften. Außerdem läßt sich die Verteilung der Störstellen ebenso wie die Anpreßkraft der Lichtleitfaser nicht in gleichem Maße beherrschen wie bei einem Sensor nach USP 5,193,129 oder EP 00 103 730.8. Bei der Herstellung ergibt sich die Schwierigkeit, daß die Anordnung von Störstruktur und Lichtleitfaser nicht stabil ist und zusätzliche Maßnahmen erforderlich sind um sie überhaupt weiterverarbeiten zu können.

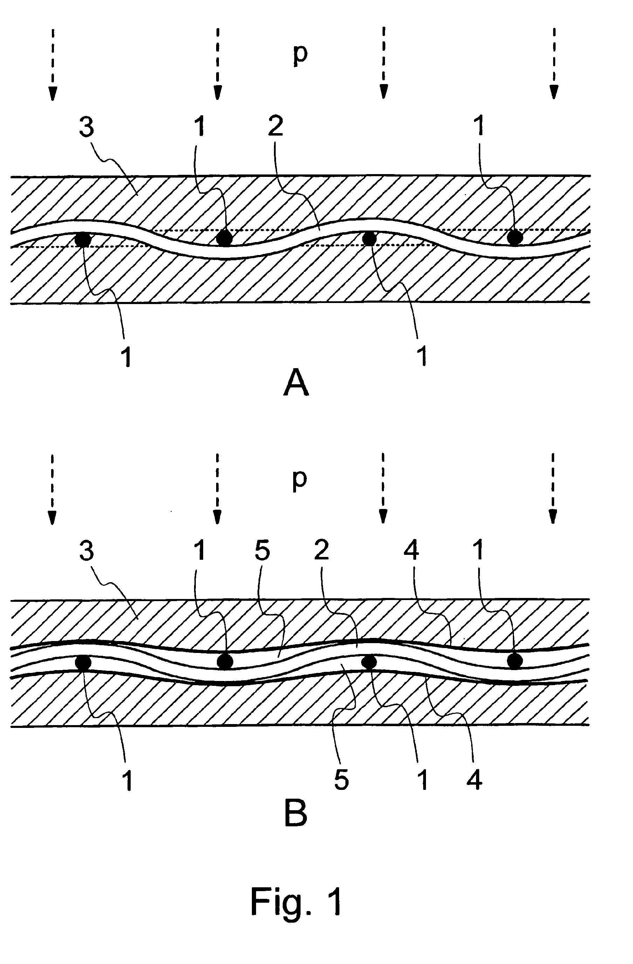

Bei der vorliegenden Erfindung wird von einem alternierenden Faserverlauf wie in USP 5,193,129 und EP 00 103 730.8 ausgegangen, der in Fig. 1 dargestellt ist. Er beinhaltet ganz allgemein eine Stütz- und Störstruktur (1) mit periodisch angeordneten stabförmigen Elementen, welche eine senkrecht dazu verlaufende Lichtleitfaser (2) wellenförmig verbiegen.

Fig. 1A zeigt dabei den Querschnitt eines Sensors, bei dem dieser Aufbau komplett von einem Elastomer (3) umgeben ist. Gestrichelt ist in Fig. 1A die quasi starre Verbindung zwischen den stabförmigen Elementen der Stütz- und Störstruktur angedeutet, die natürlich in jedem Fall Voraussetzung für den Zusammenhalt der Anordnung ist. In Fig. 1B ist eine elastische Umhüllung (4) dargestellt, die Stütz- und Störstruktur und Lichtleitfaser umgibt und dadurch Hohlräume (5) hervorruft, welche die Druckempfindlichkeit des Sensors signifikant steigern. Abweichend von den in den Schriften USP 5,193,129 und EP 00 103 730.8 angegebenen Aufbauten kann zur Erfüllung der erfindungsgemäßen Aufgabe aber keine Stütz- und Störstruktur mit geschlossenen Maschen (Leiter- oder Gitterform) Verwendung finden, weil dadurch bei der Herstellung die zu vermeidende Manipulation der Faserenden zwingend erforderlich würde.

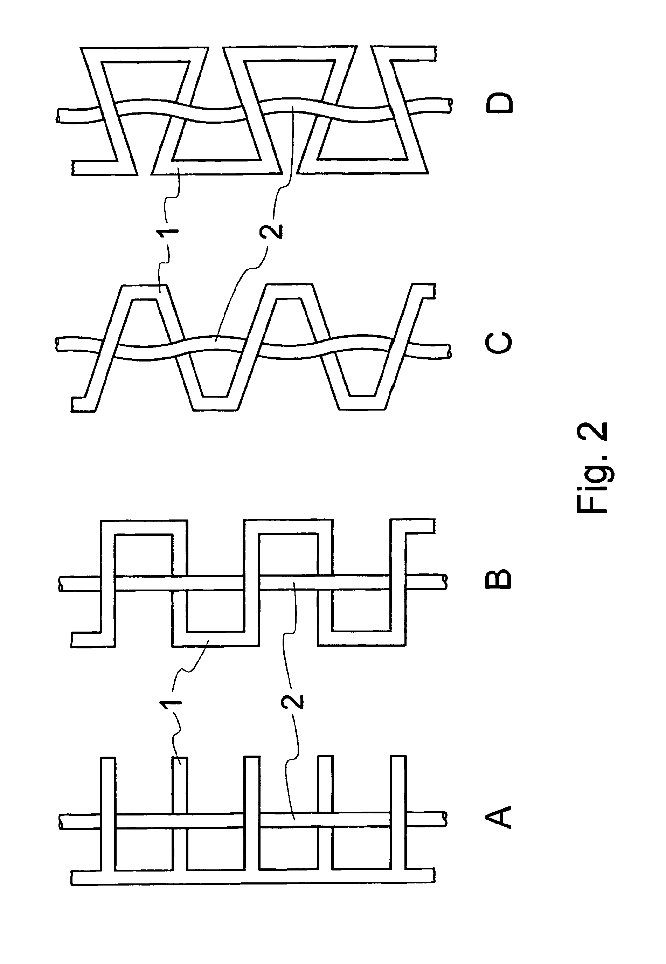

Ausgehend von dem zunächst einfacheren Fall einer Leiterform lassen sich die geschlossenen Maschen am leichtesten durch Entfernung eines der "Leiterholme" öffnen (Fig. 2A), wodurch sich eine kammähnliche Form ergibt. Man erkennt sofort, daß hierdurch die Stütz- und Störstruktur noch nicht von vorneherein dehnbar wird, was immerhin wünschenswert wäre, wenn die Faser nicht gestreckt verliefe. Es läßt sich erreichen, indem wie in Fig. 2B dargestellt bei aufeinanderfolgenden Maschen abwechselnd der linke und der rechte Holm unterbrochen wird.

Eine solche Rechteckform weist noch einen weiteren Vorteil auf: Beim Aufbringen der Lichtleitfaser auf eine kammförmige Stütz- und Störstruktur muß sie immer wieder über die Spitze des jeweils nächsten "Zahnes" geführt werden, um den alternierenden Verlauf zu realisieren. Bei diesem Vorgang besteht die Gefahr, daß sie über die Spitze des vorherigen "Zahnes" zurückgleitet, wodurch der alternierende Verlauf zumindest örtlich zerstört würde. Auf eine rechteckförmige Stütz- und Störstruktur wird die Faser hingegen dadurch aufgebracht, daß sie schraubenförmig um die Stütz- und Störstruktur herumgeführt wird. Beim Einführen in einen Zwischenraum kann sie aus dem vorhergehenden nicht herausgleiten, weil dieser in der betreffenden Richtung verschlossen ist. Die Faser kann überhaupt nur aus den beiden Zwischenräumen an den Enden der Stütz- und Störstruktur herausgleiten; bei allen anderen ist das wegen des Verschlusses der jeweilig angrenzenden Zwischenräume unmöglich. Eine Rechteckstruktur nach Fig. 2B ist also sowohl in Bezug auf Herstellbarkeit als auch hinsichtlich Stabilität der Anordnung aus Faser und Störstruktur einer Kammstruktur nach Fig. 2A deutlich überlegen. Darüber hinaus ist sie ohne weitere Maßnahmen dehnbar.

Der parallele Verlauf der stabförmigen Elemente, der sowohl bei einer kammförmigen als auch bei einer rechteckförmigen Stütz- und Störstruktur gegeben ist, führt zu einem gestreckten Faserverlauf, welch letzterer wiederum für die mangelnde Dehnbarkeit der Gesamtanordnung verantwortlich ist. Ebenso nachteilig ist, daß die Lichtleitfaser schon durch kleine Kräfte seitlich verschoben werden kann, wobei prinzipiell keine Rückstellkraft wirkt. Die Lage der Faser beeinflußt aber in bestimmten Fällen die Empfindlichkeit des Sensors und bei örtlichen Änderungen die Gleichförmigkeit derselben. Abhilfe läßt sich schaffen, indem man die Elemente abwechselnd um einen bestimmten Winkel neigt. Die Maschen der Stütz-und Störstruktur gehen dadurch von einer Rechteckform prinzipiell in eine Dreieckform über.

Um solche dreieckförmigen Maschen zu öffnen hat man die Wahl zwischen zwei Möglichkeiten, die in Fig. 2C und Fig. 2D dargestellt sind; es kann dabei gleichsam eine Seite der Dreiecke wie auch eine Ecke weggelassen werden. Die beiden Strukturen sind aus der Rechteckstrucktur von Fig. 2B abgeleitet, da diese wie gesagt gegenüber einer Kammstruktur vorteilhaft ist. Auch eine Kammstruktur läßt sich durch abwechselndes Neigen von "Zähnen" in wechselnden Abständen modifizieren, und dies kann sogar in bestimmten Fällen angebracht erscheinen. Dieser Ansatz bietet nicht die selben weiterführenden Möglichkeiten wie wenn man von einer Rechteckstruktur ausgeht, doch soll trotzdem darauf hingewiesen und abschließend auch noch eingegangen werden.

Durch die abwechselnde Neigung der stabförmigen Elemente der Störstruktur wird bewirkt, daß sich die Lichtleitfaser bei mittiger Lage in einem energetischen Minimum befindet. Wird sie zur Seite ausgelenkt, so wird sie auch in mindestens eine "Ecke" gedrückt. Ihre Neigung gegen die Ebene der Stütz- und Störstruktur muß dann an dieser Stelle größer werden, was sowohl erhöhte Biegespannungen als auch einen Zug auf die angrenzenden Bereiche der Faser verursacht, dem sie wiederum nur durch stärkere Biegung an weiter entfernten Stellen nachgeben kann. Sie ist gleichsam bestrebt, zwischen Störstellen mit gleichen Abständen zu verlaufen, und solche existieren nur in der Mitte der Stütz-und Störstruktur. Dies resultiert in einer Kraft, die seitlichen Auslenkungen der Faser entgegenwirkt.

Als Regel zur seitlichen Stabilisierung der Lichleitfaser kann daraus die Aussage abgeleitet werden, daß die stabförmigen Elemente, bzw. die Stellen über die die Faser verlaufen müßte. abseits des gewünschten Verlaufs keine gleichen Abstände haben dürfen. Eine Ausgestaltung der Stütz- und Störstruktur mit aufeinanderfolgenden parallelen stabförmigen Elementen wie sowohl in der USP 5,193,129 als auch in der EP 00 103 730.8 angegeben ist wird durch diese Regel verboten.

Aufgrund der genannten Rückstellkraft, die bei einem parallelen Verlauf der stabförmigen Elemente nicht vorhanden ist, kann der Faser nun ein leicht serpentinenförmiger Verlauf aufgezwungen werden (in Fig. 2C und 2D übertrieben eingezeichnet). Mit ihrem Bestreben, sich zu begradigen geht nämlich ein Bestreben nach größerer seitlicher Auslenkung einher, und dem wirkt hier eben eine Kraft entgegen. Die Periode dieses serpentinenförmigen Verlaufs kann dabei durchaus auch größer ausfallen als die der Stütz- und Störstruktur; der Tatsache, daß sich die Lichtleitfaser bei durchschnittlich mittigem Verlauf in einem energetischen Minimum befindet, tut das keinen Abbruch.

Die beiden Dreieckstrukturen in Fig. 2C und Fig. 2D sind nicht in gleichem Maße vorteilhaft. Der Aufbau nach Fig. 2C weist eine signifikant geringere Stabilität auf als jener nach Fig. 2D. Dies ist verständlich, denn um aus der jeweils letzten Masche herauszurutschen braucht sich die Lichtleitfaser bei einem Aufbau nach Fig. 2C fast nur zu entspannen, während sie sich bei einem Aufbau nach Fig. 2D zuerst noch deutlich weiter verbiegen muß. Für alle weitergehenden Ausgestaltungen wird daher das Prinzip des Aufbaus nach Fig. 2D gewählt.

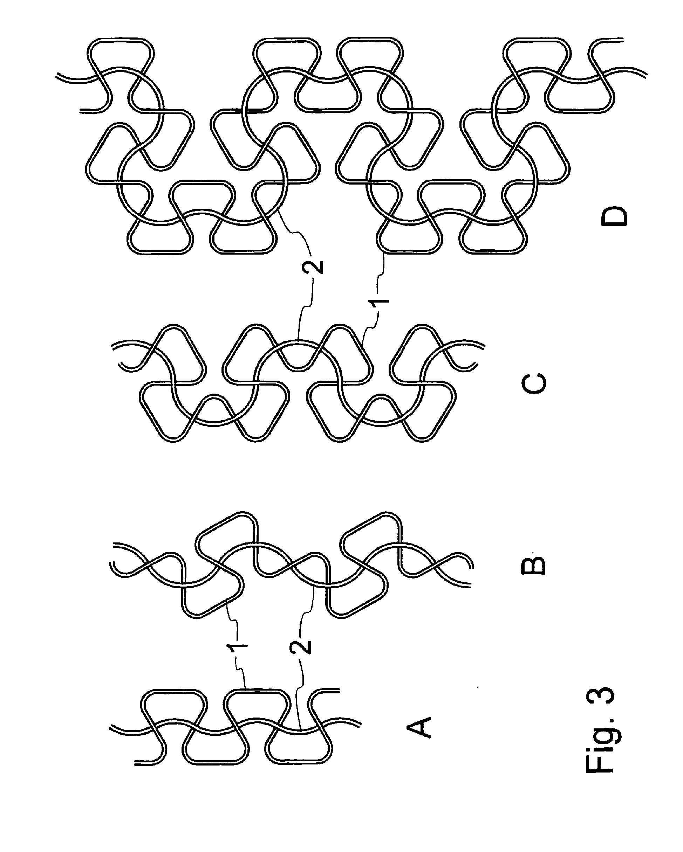

Eine Stütz- und Störstruktur nach dem Prinzip von Fig. 2D läßt sich ohne besondere Hilfsmittel ganz einfach z.B. aus Federdraht biegen, wodurch ein wichtiger Teil der obengenannten Aufgabe gelöst wird. Fig. 3A zeigt die direkte Umsetzung des in Fig. 2D dargestellten Prinzips, wobei sich ein langgestreckter, linienförmiger Aufbau ergibt, für den zahlreiche Anwendungen existieren. Da er seitlich fast durchgehende Kanten aufweist und relativ schmal ist, kann er ganz ähnlich wie ein Sensor nach DE 195 34 260 mit einer elastischen Umhüllung umgeben werden, ohne daß diese durch vorstehende Ecken übermäßig belastet wird oder ihrerseits den Aufbau verformt, und ohne befürchten zu müssen, daß sie etwa an den Störstellen die Lichtleitfaser nicht berührt (vgl. Fig. 1B). Wird diese Anordnung dann in eine elastische Masse (3) eingebettet, verbleiben seitlich der Störstellen Hohlräume (5) unter dem Lichtleiter, was wie dargelegt die Druckempfindlichkeit ganz wesentlich erhöht. Alternativ kann die Einbettung jedoch auch unterbleiben, da sich die elastische Umhüllung so gestalten läßt, daß sie den Aufbau bereits ausreichend schützt.

Ein Aufbau nach Fig. 3A besitzt überdies den Vorteil, daß sich die Lichtleitfaser sehr einfach auf die Stütz-und Störstruktur aufbringen läßt. Dreht man letztere nämlich um ihre Längsachse und führt seitlich die Lichtleitfaser mit einem Vorschub von genau einer Periode der Stütz- und Störstruktur pro Umdrehung derselben zu, so nimmt sie ganz von selbst die gewünschte mittige Position ein. Es besteht dabei keine Notwendigkeit, die Faser irgendwie zu befestigen. Zu beachten ist allerdings, daß sie bei diesem Vorgang in sich verdreht wird.

Fig. 3B zeigt einen Aufbau, der zu einem deutlich stärker gewundenen Verlauf der Lichtleitfaser führt, somit also besser für höhere Anforderungen an die Dehnbarkeit des Sensors geeignet ist. Er eignet sich allerdings kaum dazu, ihn mit einer elastischen Umhüllung zu umgeben, und auch die Lichtleitfaser läßt sich nicht so einfach aufbringen wie bei einem Aufbau nach Fig. 3A. Dennoch läßt sich auch ein Aufbau dieser Art recht schmal gestalten und ist damit für linienförmige Sensoren geeignet.

Durch einen Aufbau nach Fig. 3B kann die Lichtleitfaser im Prinzip noch in gestreckter Form verlaufen. Das ist bei einem Aufbau nach Fig. 3C nicht mehr möglich. Ein solcher benötigt eine noch etwas größere seitliche Ausdehnung, kann aber immer noch für linienförmige Sensoren in Erwägung gezogen werden. Da seine Kanten nicht so unregelmäßig sind wie die des Aufbaus nach Fig. 3B kann sogar eine elastische Umhüllung angewandt werden. Da die Störstellendichte hier auch noch sehr hoch ist, lassen sich damit linienförmige Sensoren von sehr großer Druckempfindlichkeit herstellen, die gleichzeitig enorm dehnbar sind. Gleichzeitig eignet sich diese Aufbau aber auch bereits für flächige Belastungssensoren.

Mit einem Aufbau nach Fig. 3D läßt sich die Lichtleitfaser in noch wesentlich größeren Serpentinen führen. Der Aufbau erscheint auf den ersten Blick nicht besonders vorteilhaft, weil er recht schwierig herzustellen ist, keine elastische Umhüllung erlaubt, und die Störstellendichte darüber hinaus auch noch kleiner ist als bei einem Aufbau nach Fig. 3C. Er kann jedoch beim Entwurf von flächigen Belastungssensoren bedeutsam werden, wie im folgenden erläutert werden soll:

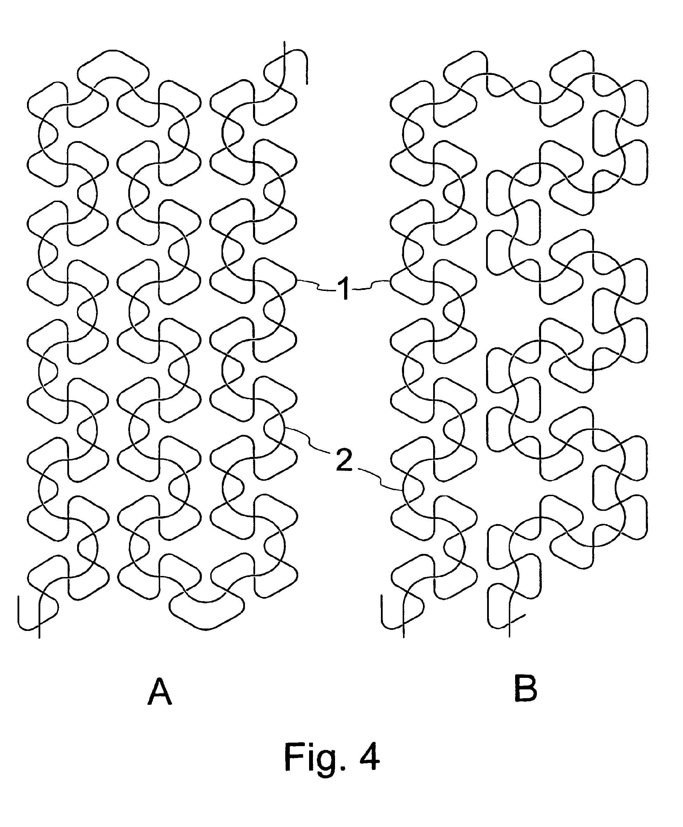

Fig. 4A zeigt einen flächigen Lichtleiteraufbau, wie er sich in Versuchen als sehr vorteilhaft erwiesen hat. Er besteht im wesentlichen aus drei nebeneinanderliegenden Aufbauten nach Fig. 3C, wobei die Stütz- und Störstrukturen (1) hier z.B. als durchgehendes Drahtbiegeteil ausgeführt sind. Der gezeichnete Aufbau ergibt 81 wirksame Störstellen. (Die jeweils ersten und letzten Kreuzungspunkte der Lichtleitfaser (2) mit der Stütz- und Störstruktur gelten nicht als wirksame Störstellen, weil hier der Kontakt von beiden nicht sicher gewährleistet ist.) Man erkennt aber, daß die Lichtleitfaser an gegenüberliegenden Ecken des Sensoraufbaus hervortritt. Dies oder zumindest, daß die Lichtleiterenden nicht an einer gemeinsamen Schmalseite des Aufbaus hervortreten, kann unter beengten Platzverhältnissen Probleme bereiten. Wäre das hier der Fall, so müßte auf ein ganzes Drittel des Aufbaus verzichtet werden, was nicht nur seine Gesamtempfindlichkeit, sondern auch seine Flächendeckung stark herabsetzen würde.

In einem solchen Fall ist es möglich, zwei nebeneinanderliegende Aufbauten nach Fig. 3C durch einen einzelnen nach Fig. 3D zu ersetzen. Fig. 4B zeigt eine solche Anordnung. Bei ihr treten die Lichtleiterenden an einer gemeinsamen Schmalseite hervor, und ihre Fläche ist nur geringfügig kleiner als die der Anordnung nach Fig. 4A. Sie weist 70 wirksame Störstellen auf, wohingegen zwei Drittel des Aufbaus nach Fig. 4A nur 54 ergeben hätten. Das kommt daher, daß ein Aufbau nach Fig. 3D zwar bezüglich seiner Fläche eine kleinere Störstellendichte hat als ein solcher nach Fig. 3C, jedoch nicht auf seine Länge gerechnet.

Auf jede der angegebenen Stütz- und Störstrukturen kann die Lichtleitfaser auch mehrfach aufgebracht werden. Dadurch erhöht sich nicht nur die Anzahl der Störstellen, es bietet sich z.B. auch die wichtige Möglichkeit, sie auf ihrem Weg durch die Stütz- und Störstruktur wieder zurückzuführen, um dadurch ihren Ein- und Austritt an der gleichen Stelle zu erhalten. Ebenso ist es dadurch möglich, mehrere unabhängige Lichtleitfasern durch ein und dieselbe Stütz- und Störstruktur zu führen, was einen redundanten Aufbau ergibt, der sowohl aus Gründen der Ausfallsicherheit als auch zur Rauschunterdrückung wünschenswert sein kann.

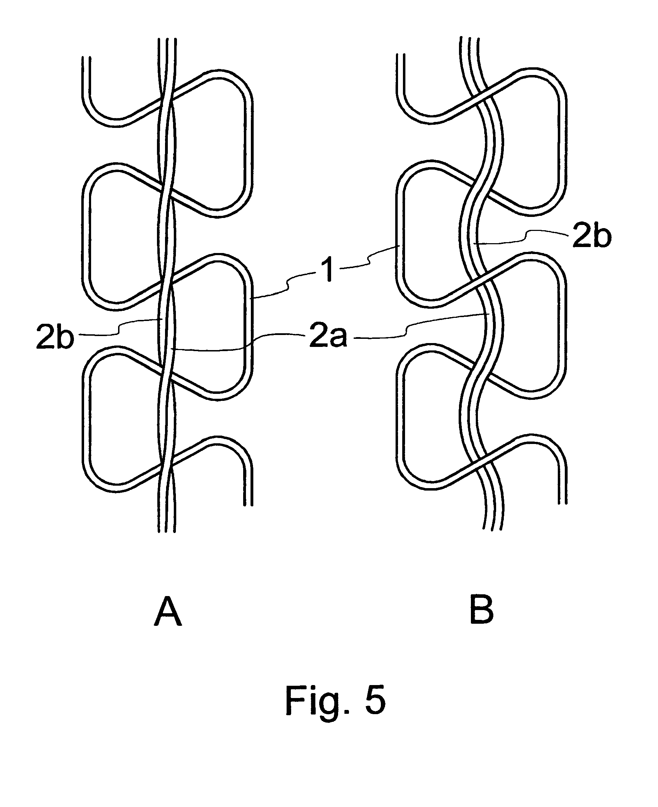

Hierfür bieten sich mehrere Möglichkeiten, die Sensoren mit speziellen Eigenschaften ergeben. Fig. 5A zeigt am Beispiel einer Stütz- und Störstruktur (1) nach Fig. 3A einen Aufbau, der sich ergibt, wenn zwei Lichtleitfasern (2a, 2b) nacheinander so aufgebracht werden, daß sie an den Störstellen auf gegenüberliegenden Seiten der Stütz- und Störstruktur zu liegen kommen. Ein solcher Aufbau ist besonders für Stör- und Stützstrukturen nach Fig. 3A interessant, da er sehr stabil ist, sogar so stabil, daß für spezielle Anwendungen weder eine elastische Umhüllung noch eine Einbettung erforderlich wird. Es ist kaum möglich, die Lichtleitfasern aus ihrer erwünschten mittigen Position auszulenken. Im Verein mit der ohnehin verdoppelten Störstellendichte kann damit eine besonders hohe Gleichförmigkeit der Sensoreigenschaften erzielt werden. Die Anzahl der Lichtleitfasern, die auf diese Weise geführt werden können, ist allerdings auf zwei beschränkt, und es ist auch nicht so einfach, ihnen bei einer Stütz- und Störstruktur nach Fig. 3A einen serpentinenförmigen Verlauf zu verleihen, was den Sensor weniger dehnbar macht.

Es ist auch möglich, zwei Lichtleitfasern nacheinander so aufzubringen, daß sie die Stütz- und Störstruktur auf jeweils der gleichen Seite kreuzen. Ein solcher Aufbau ist aber - abgesehen vom Herstellungsverfahren - äquivalent zu einem Aufbau nach Fig. 5B, mit dem einzigen Unterschied, daß sich die Lichtleitfasern zwischen den Störstellen kreuzen. Er ergibt sich auch automatisch durch Drehen der Stütz- und Störstruktur wie oben beschrieben, wobei hier lediglich zwei Lichtleitfasern statt einer seitlich zugeführt werden und sich ihrer Verdrehung ein gegenseitiges Verseilen hinzugesellt.

Ein Aufbau nach Fig. 5B, bei dem mehrere Lichtleitfasern nebeneinander durch die Stütz- und Störstruktur verlaufen, ist nicht auf zwei Fasern beschränkt. Seine Herstellung ist etwas schwieriger, weil hierzu die seitliche Zuführung der Fasern ebenfalls gedreht werden oder aber um eine ruhende Stütz- und Störstruktur schraubenförmig herumbewegt werden muß, wobei alle Fasern gleichzeitig zuzuführen sind. Ein Verdrehen der Fasern wird dabei aber vermieden. Das kann wünschenswert sein, weil Torsionsspannungen ja Schubspannungen sind, für die manche Lichtleitfasern nur eine geringe Belastbarkeit aufweisen.

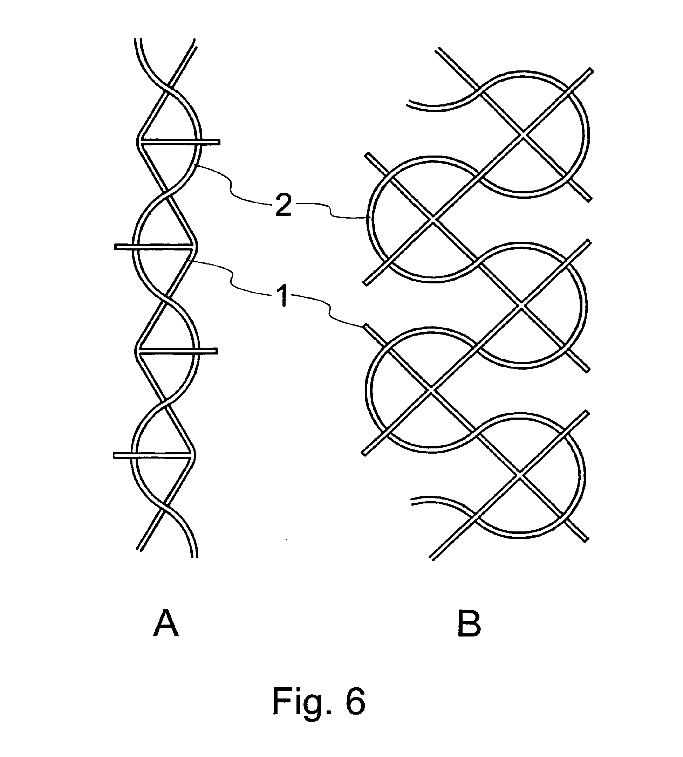

In Fig. 6 sind zwei interessante Ausgestaltungsmöglichkeiten für Stütz- und Störstrukturen mit kamm-artiger Geometrie skizziert, die durch eine Art "Rückgrat" mit daraus hervorragenden "Zinken" gekennzeichnet ist. Läßt man diese "zinken" nach verschiedenen Seiten zeigen, erreicht man dadurch nicht nur eine Symmetrie des Aufbaus und damit der Sensoreigenschaften sondern kann sogar das "Rückgrat" zur Erzeugung zusätzlicher Störstellen nutzen. Es erscheint zunächst nachteilig, daß solche Strukturen immer Verzweigungen der Stütz- und Störstruktur beinhalten, die einen zusätzlichen Fertigungsschritt erforderlich machen. Daraus folgt aber nicht zwingend, daß dieser zusätzliche Fertigungsschritt den Gesamtaufwand erhöht.

Fig.6A zeigt einen Aufbau dessen Stütz- und Störstruktur (1) eine dehnbare "Rückgrat"-Struktur und abwechselnd nach links und rechts daraus hervorragende "Zinken" besitzt. Er weist einige Nachteile auf, die ihn für bestimmte Anwendungen ungeeignet machen. So läßt er sich wegen der hervorstehenden Spitzen nur schwer mit einer elastischen Umhüllung umgeben; eine solche wird hier stark mechanisch beansprucht. Des weiteren erkennt man, daß die Lichtleitfaser (2) gewissermaßen nur auf einer Seite der "Rückgrat"-Struktur verläuft und durch die Zinken nur "daraufgespannt" wird. Falls die Lichtleitfaser einmal über die Spitze einer "Zinke" gleitet, ist es leicht möglich, daß sich dieser Vorgang sofort bei den angrenzenden Zinken fortsetzt. Der Aufbau ist somit nur halb-stabil; d.h. zu seiner Auflösung ist nur eine relativ kleine Potentialbarriere zu überwinden.

Ein Aufbau nach Fig. 6A läßt sich allerdings sehr leicht um eine Achse senkrecht zur Zeichenebene biegen. Geschieht dies, so verschiebt sich die Lichtleitfaser seitlich, um wieder gleiche Abstände zwischen den Störstellen zu erhalten. Eine Einbettung in einen Elastomer darf darum erst nach diesem Biegevorgang erfolgen. Wird dies beachtet, so läßt sich ein solcher Sensor praktisch in beliebiger Kurvenform herstellen.

Die Stütz- und Störstruktur (1) des Aufbaus nach Fig. 6B weist Paare von Zinken auf, die abwechselnd auf verschiedenen Seiten aus der "Rückgrat"-Struktur hervorragen. Das führt dazu, daß die Lichtleitfaser (2) abwechselnd über und unter dem "Rückgrat" verläuft, also praktisch darum gewunden ist. Das liefert eine wesentlich höhere Stabilität als sie bei einem Aufbau nach Fig. 6A erreicht wird. Besonders interessant ist hier aber, daß sich die Stütz- und Störstruktur als Teil eines Gitters mit quadratischen Maschen auffassen läßt, also einer Struktur, die an sich aus lauter parallelen Teilen besteht. Auch mit einer solchen Struktur läßt sich also die oben aufgestellte Regel erfüllen, wonach die Lichtleitfaser abseits ihres gewünschten Verlaufs nur ungleiche Störstellenabstände antreffen darf. Gitter mit quadratischen Maschen sind am Markt in vielfältiger Ausführung erhältlich. Die Stütz- und Störstruktur kann aus einem solchen ganz einfach diagonal herausgeschnitten werden, was unabhängig von der zu fertigenden Stückzahl sehr kostengünstig ist.

Die Tatsache, daß die Stütz- und Störstruktur Reihen aus hintereinander angeordneten stabförmigen Elementen enthält, was normalerweise die Dehnbarkeit des Aufbaus beeinträchtigt, ist hier nicht kritisch. Zum einen sind diese Reihen maximal drei Elemente lang, zum anderen verlaufen sie diagonal zu den Hauptachsen des Sensors. Ist dieser nur einigermaßen langgestreckt, so ist es nahezu unmöglich, ihn unter 45° zu seiner langen Achse zu belasten, und Scherspannungen können Sensoren dieser Art aufgrund ihrer Biegsamkeit kaum aufnehmen.

Der beschriebene Prinzipaufbau eignet sich folglich sowohl für linienförmige als auch für flächige faseroptische Belastungssensoren. In keinem Fall ist bei ihrer Herstellung eine Manipulation der Faserenden notwendig. Linienförmige Ausgestaltungen können mit einer elastischen Umhüllung zur Steigerung der Druckempfindlichkeit auch bei Einbettung in relativ harte Elastomere umgeben werden. Bei flächigen Ausführungen läßt sich dies nur durch Verwendung weicherer Elastomere erreichen. Hierdurch und auch durch mehrfaches Aufbringen der Lichtleitfaser kann die Empfindlichkeit in weiten Grenzen variiert werden. Die hohe Stabilität des Aufbaus führt zu guter Reproduzierbarkeit und Gleichförmigkeit der Sensoreigenschaften.

## Patentansprüche

1. Prinzipaufbau für faseroptische Belastungssensoren mit einer Stütz- und Störstruktur (1) und mindestens einer ein Lichteintritts- und ein Lichtaustrittsende aufweisenden Lichtleitfaser (2, 2a, 2b), wobei die Belastung auf die Lichtleitfaseranordnung einwirkt und über vom Lichteintrittsende zum Lichtaustrittsende übertragenes Licht aufgrund von Biegeradiusänderungen der die Lichtleitfaseranordnung bildenden Lichtleitfaser erfasst ist, **dadurch gekennzeichnet, dass** das Lichteintritts- und das Lichtaustrittsende gemeinsam außerhalb der Stütz- und Störstruktur angeordnet sind, die Stütz- und Störstruktur harte, von allen Seiten zugängliche stabförmige Elemente aufweist, die in einer Ebene so angeordnet sind, dass ihre Querschnitte auf mindestens einem bestimmten Weg durch die Ebene gleiche Abstände haben, abseits dieses Weges jedoch nicht, und die Lichtleitfaser abwechselnd über und unter den stabförmigen Elementen auf ebendiesem Weg verläuft, wobei die genannten Querschnitte der stabförmigen Elemente so ausgeführt und ihre gleichen Abstände so gewählt sind, dass durch die **dadurch** hervorgerufene wellenförmige Biegung der Lichtleitfaser stets eine kleine Anpresskraft zwischen Lichtleitfaser und stabförmigen Elementen sichergestellt ist, und wobei die stabförmigen Elemente unmittelbar oder mittels besonderer Verbindungselemente abseits des Weges, auf dem die Lichtleitfaser verläuft quasi-starr so miteinander verbunden sind, dass durch die stabförmigen Elemente und/oder die Verbindungselemente weder allseits geschlossene Maschen noch ausgedehnte geradlinige Strukturen aus unmittelbar miteinander verbundenen Elementen gebildet werden.

2. Prinzipaufbau für faseroptische Belastungssensoren nach Anspruch 1, bei dem sowohl die stabförmigen Elemente als auch die quasi-starren Verbindungselemente in Form einer gemeinsamen drahtförmigen durch die Ebene verlaufenden Struktur ausgestaltet sind.

3. Prinzipaufbau für faseroptische Belastungssensoren nach einem der Ansprüche 1 und 2, bei dem die Stütz- und Störstruktur (1) und die Lichtleitfaser (2, 2a, 2b) von einer hohlen elastischen Umhüllung (4) umgeben sind, welche sich an den Stellen, an denen die Lichtleitfaser die stabförmigen Elemente der Stütz- und Störstruktur kreuzt, der Lichtleitfaser anschmiegt.

4. Prinzipaufbau für faseroptische Belastungssensoren nach einem der Ansprüche 1 und 2, bei dem die Stütz- und Störstruktur (1) und die Lichtleitfaser (2, 2a, 2b) in einen aus einem Elastomer bestehenden Körper (3) eingebettet sind.

5. Prinzipaufbau für faseroptische Belastungssensoren nach Anspruch 3, bei dem die Stütz-und Störstruktur (1), die Lichtleitfaser (2, 2a, 2b) und die elastische Umhüllung (4) in einen aus einem Elastomer bestehenden Körper (3) eingebettet sind.

6. Prinzipaufbau für faseroptische Belastungssensoren nach einem der obigen Ansprüche, bei dem mehrere Lichtleitfasern (2a, 2b) nebeneinander durch die Stütz- und Störstruktur (1) verlaufen.

7. Prinzipaufbau für faseroptische Belastungssensoren nach einem der Ansprüche 1 bis 5, bei dem zwei Lichtleitfasern (2a, 2b) so durch die Stütz- und Störstruktur verlaufen, daß an Stellen, wo die eine Lichtleitfaser über einem der stabförmigen Elemente der Stütz-und Störstruktur verläuft, die andere Lichtleitfaser unter dem betreffenden stabförmigen Element verläuft und umgekehrt.

## Claims

1. Base construction for fibre optic load sensors comprising a support and deformation structure (1) and at least one optical fibre optical waveguide (2, 2a, 2b) having light entry and light exit ends, said load acting upon the optical fibre waveguide assembly and detected by light transmitted from the light entry end to the light exit end being affected by changes in the bending radius of the optical fibre forming said optical fibre waveguide assembly, **characterized in that** both the light entry and light exit ends are disposed outside said support and deformation structure, **in that** said support and deformation structure comprises hard rod-shaped elements accessible from all sides and disposed in a plane in a manner such that their cross-sections are equally spaced along at least one specific path through said plane but are not so spaced outside that path, and **in that** said optical fibre extends alternatingly abovbe and below the rod-shaped elements along the aforesaid path, with the aforesaid cross-sections of the rod-shaped elements being configured, and the equal distances between them being selected, so as to cause the wave-shaped bends of the optical fibres to ensure a low compressive force acting at all times between the optical fibre and the rod-shaped elements, and with said rod-shaped elements being interconnected in a quasi-rigid manner directly or by means of special connecting elements disposed outside the path along which the optical fibre extends and in such a manner that said rod-shaped elements and/or said connecting elements form neither closed meshes nor extended rectilinear structures composed of directly interconnected elements.

2. Base construction for optical fibre load sensors as claimed in claim 1 in which both said rod-shaped elements and the quasi-rigid connecting elements are configured to form a common wire-shaped structure extending through said plane.

3. Base construction for optical fibre load sensors as claimed in any one of claims 1 and 2 in which the supporting and deformation structure (1) and the optical fibre (2, 2a, 2b) are surrounded by a hollow resilient sheath (4) which snugly fits the optical fibre at sites where the latter intersects the rod-shaped elements of the support and deformation structure.

4. Base construction for optical fibre load sensors as claimed in any one of claims 1 and 2 in which the support and deformation structure (1) and the optical fibre (2, 2a, 2b) are embedded in a body (3) consisting of an elastomer material.

5. Base construction for optical fibre load sensors as claimed in claim 3 in which the support and deformation structure (1), the optical fibre (2, 2a, 2b) and the resilient sheath (4) are embedded in a body (3) consisting of an elastomer material.

6. Base construction for optical fibre load sensors as claimed in any one of the foregoing claims in which a plurality of optical fibres (2a, 2b) extend side by side through the support and deformation structure (1).

7. Base construction for fibre load load sensors as claimed in any one of claims 1 to 5 in which two optical fibres (2a, 2b) extend through said support and deformation structure in a manner such that in places where one of said optical fibres extends above one of said rod-shaped elements of the support and deformation structure the other optical fibre extends below the respective rod-shaped elements, and vice versa.

## Revendications

1. Schéma de principe de capteurs de charge à fibres optiques avec une structure de support et de renfort (1) et au moins une fibre optique (2, 2a, 2b) présentant une extrémité d'entrée de la lumière et une extrémité de sortie de la lumière, dans lequel la charge agit sur la disposition de fibres optiques et est détectée à l'aide de la lumière transmise de l'extrémité d'entrée de la lumière à l'extrémité de sortie de la lumière en fonction des changements de rayon de courbure des fibres optiques formant l'installation de fibres optiques, **caractérisé en ce que** les extrémités d'entrée et de sortie de la lumière sont disposées ensemble en dehors de la structure de support et de renfort, la structure de support et de renfort présente des éléments en forme de barres durs et accessibles par tous les côtés qui sont disposés dans un même plan de telle manière que leurs sections soient à la même distance sur au moins un trajet donné passant par le plan mais pas en dehors de ce trajet, et les fibres optiques passent alternativement par-dessus et par-dessous les éléments en forme de barres sur ledit trajet, lesdites sections des éléments en forme de barres étant réalisées et leurs écartements égaux choisis de telle façon que la flexion ondulée des fibres optiques qui en résulte assure toujours une faible force d'appui entre les fibres optiques et les éléments en forme de barres, et dans lequel les éléments en forme de barres sont reliés directement ou au moyen d'éléments de liaison spéciaux en dehors du trajet sur lequel passe la fibre optique, de façon quasi rigide, de telle manière que les éléments en forme de barres et/ou les éléments de liaison ne forment ni des mailles fermées de tous côtés ni des structures rectilignes étendues formées d'éléments reliés directement entre eux.

2. Schéma de principe de capteurs de charge à fibres optiques selon la revendication 1, dans lequel aussi bien les éléments en forme de barres que les éléments de liaison quasirigides sont réalisés sous la forme d'une structure commune filiforme passant dans le plan.

3. Schéma de principe de capteurs de charge à fibres optiques selon l'une des revendications 1 et 2, dans lequel la structure de support et de renfort (1) et la fibre optique (2, 2a, 2b) sont entourées d'une enveloppe élastique creuse (4) qui s'applique sur la fibre optique aux endroits où celle-ci croise les éléments en forme de barres de la structure de support et de renfort .

4. Schéma de principe de capteurs de charge à fibres optiques selon l'une des revendications 1 et 2, dans lequel la structure de support et de renfort (1) et la fibre optique (2, 2a, 2b) sont incluses dans un corps (3) composé d'élastomère.

5. Schéma de principe de capteurs de charge à fibres optiques selon la revendication 3, dans lequel la structure de support et de renfort (1), les fibres optiques (2, 2a, 2b) et l'enveloppe élastique (4) sont incluses dans un corps (3) composé d'élastomère.

6. Schéma de principe de capteurs de charge à fibres optiques selon l'une des revendications précédentes, dans lequel plusieurs fibres optiques (2a, 2b) passent l'une à côté de l'autre à travers la structure de support et de renfort (1).

7. Schéma de principe de capteurs de charge à fibres optiques selon l'une des revendications 1 à 5, dans lequel deux fibres optiques (2a, 2b) passent à travers la structure de support et de renfort de telle manière qu'aux endroits où l'une des fibres optiques passe par-dessus l'un des éléments en forme de barres de la structure de support et de renfort, l'autre fibre optique passe par-dessous l'élément en forme de barre en question, et inversement.
